# EUROPÄISCHE PATENTSCHRIFT

(11) **EP 4 374 356 B1**
(45) Veröffentlichungstag und Bekanntmachung des Hinweises auf die Patenterteilung: **06.08.2025**
(21) Anmeldenummer: 22743729.0
(22) Anmeldetag: 22.06.2022
(51) Int. Cl.: H01P 5/103, H04B 5/43, G08C 17/02, H01P 1/04

(54) **ELEKTRISCHE KOPPELANORDNUNG ZUR KABELLOSEN SIGNALÜBERTRAGUNG IM BEREICH EINES HOHLEN MASCHINENELEMENTS**
ELECTRIC COUPLING ARRANGEMENT FOR WIRELESS SIGNAL TRANSMISSION IN THE AREA OF A HOLLOW MACHINE PART
AGENCEMENT DE COUPLAGE ÉLECTRIQUE POUR LA TRANSMISSION DE SIGNAUX SANS FIL DANS LA ZONE D'UNE PARTIE DE MACHINE CREUSE

(30) Priorität: 23.07.2021 DE 102021119115
(43) Veröffentlichungstag der Anmeldung: 29.05.2024
(73) Patentinhaber: Schaeffler Technologies AG & Co. KG, 91074 Herzogenaurach (DE)
(72) Erfinder: MOELLMANN, Andreas, 90768 Fürth (DE); ETGES, Dominik, 52066 Aachen (DE); BLECKMANN, Dirk, 58791 Werdohl (DE); CERKASOV, Artem, 58540 Meinerzhagen (DE)
(86) Internationale Anmeldenummer: PCT/DE2022/100456
(87) Internationale Veröffentlichungsnummer: WO 2023/001326

(56) Entgegenhaltungen:
- DE-A1- 102004 018 370
- DE-A1- 102014 112 116
- DE-B3- 102013 100 979

## Beschreibung

Die vorliegende Erfindung betrifft eine elektrische Koppelanordnung zur kabellosen Signalübertragung im Bereich von Maschinenelementen, vorzugsweise eines Getriebes oder Elektromotors.

Das Einsatzgebiet der Erfindung erstreckt sich vornehmlich auf die Kraftfahrzeugtechnik. Insbesondere bei Hybrid- oder Elektrofahrzeugen werden Komponenten des Antriebstrangs, wie insbesondere Elektromotoren, Getriebe und Transmissionswellen meist einer sensortechnischen Zustandsüberwachung unterzogen. Hierfür kommen zustandsüberwachende Sensoren im Bereich von Zahnrädern, Lagern, Kupplungen und dergleichen zum Einsatz, welche vornehmlich die Bauteiltemperatur, daneben jedoch auch Schwingungen, Spannungen, Drehmomente, Beschleunigungen, Winkel, Drehzahlen, magnetische Feldstärken und dergleichen messen, um diese einer gewöhnlich außenliegenden elektronischen Auswerteeinheit zur Signalauswertung und/oder einer Sende- und/oder Empfangseinheit z.B. einem Reader, beispielsweise im Rahmen eines so genannten Condition Monitoring Systems oder als Regelparameter für Regelprozesse zur Verfügung zu stellen.

Die Signalübertragung zwischen den Sensoren und der elektronischen Auswerteeinheit kann dabei störungssicher drahtgebunden erfolgen, sofern eine Signalübertragung nicht zwischen relativ zueinander bewegten, insbesondere drehenden, Bauteilen stattfindet. Es existieren zwar elektrische kontaktgebundene Drehdurchführungseinheiten, diese sind jedoch aufgrund des mechanischen Schleifkontaktprinzips recht störanfällig und wartungsgebunden. Die vorliegende Erfindung widmet sich dagegen der Thematik einer kabellosen Signalübertragung, welche beispielsweise per Funk, Infrarot oder dergleichen realisiert werden kann. Daneben lässt sich die erfindungsgemäße Lösung auch im Rahmen anderer Antriebsstränge, beispielsweise bei Windenergieanlagen, einsetzen.

### Stand der Technik

Aus der DE 10 2014 200 639 A1 geht ein System zur Ermittlung von Zustandsdaten eines Getriebes, insbesondere eines Planetengetriebes, umfassend zumindest eine passive RFID-Sensoreinheit mit einem Sensor und einem RFID-Reader hervor. Hier wird nur allgemein vorgeschlagen, dass der RFID-Reader an einem ersten Getriebeteil angeordnet und die RFID-Sensoreinheit an einem zweiten Getriebeteil angeordnet ist, das gegenüber dem ersten Getriebeteil relativ bewegbar ist. Eine derartige kabellose Signalübertragung setzt eine störungsfreie Funkstrecke voraus, welche nicht durch angrenzende Bauteile oder äußere Einflüsse beeinträchtigt werden kann.

Aus der WO 2021 1004568 A1 geht eine elektrische Antriebsmaschine, Getriebe, Verbrennungsmotor und Kombinationen hieraus hervor, welche mit mehreren zustandsüberwachenden Sensoren zur Bildung eines Sensornetzwerks bestückt sind. Die Sensoren des Sensornetzwerks sind an bevorzugt unterschiedlichen Positionen in der Maschine angeordnet und jeweils zur Messung einer physikalischen Größe vorgesehen. Hierfür sind die einzelnen Sensoren jeweils elektrisch drahtlos mit einer elektronischen Auswerteeinheit verbunden, welche die drahtlos empfangenen Signale der Sensoren verarbeitet. Bei der Konzeption für die Anordnung der Sensoren ist auch hier auf unterbrechungsfreie Funkstrecken zu achten. Weitere elektrische Koppelanordnungen nach dem Stand der Technik sind aus den Dokumenten DE102013100979, DE1020141121116, DE102004018370 und DE3044734 bekannt.

In der Praxis ist es jedoch nicht immer möglich, die zustandsüberwachenden Sensoren derart in die Maschine zu integrieren, dass eine unterbrechungsfreie kabellose Signalübertragung, insbesondere zwischen sich relativ zueinander drehenden Maschinenelementen und aus tiefen, schwer zugänglichen Maschinenstrukturen heraus, gewährleistbar ist.

Es ist daher die Aufgabe der vorliegenden Erfindung eine elektronische Koppelanordnung zur kabellosen Signalübertragung im Bereich von Maschinenelementen zu schaffen, welche mit einfachen technischen Mitteln eine zuverlässige Weiterleitung von Sensorsignalen an eine externe elektronische Auswerteeinheit sicherstellt.

### Kurzbeschreibung der Erfindung

Die Aufgabe wird durch eine elektrische Koppelanordnung gemäß Anspruch 1 gelöst. Der Anspruch 10 gibt als bevorzugte Anwendung ein Getriebe oder einen Elektromotor mit einer erfindungsgemäßen elektrischen Koppelanordnung an. Die abhängigen Ansprüche sind auf vorteilhafte Weiterbildungen der Erfindung gerichtet.

Die Erfindung schließt die technische Lehre ein, dass eine elektrische Koppelanordnung zur kabellosen Signalübertragung im Bereich eines Hohlraums eines zumindest teilweise hohlen Maschinenelements ein mit einem im oder am Maschinenelementen angeordneten Sensor verbundenes senderseitiges hohlzylindrisches Koppelelement umfasst, welches im Hohlraum eingepasst ist, und welches über eine Übertragungsstrecke, insbesondere Luftstrecke oder Öl als Dielektrikum mit einem empfängerseitigen stiftförmigen Koppelelement korrespondiert, das zumindest teilweise in den im Hohlraum angeordneten hohlzylindrischen Bereich des senderseitigen Koppelelements hineinragt. Dabei beinhaltet die erfindungsgemäße Lösung auch einen Tausch von Sender- und Emfpangsseite. Vorzugsweise sendet der Sensor ein Signal aus, welches über die Koppelelemente zur Sende-/Empfangseinheit / Auswerteeinheit übertragen wird.

Mit anderen Worten bezieht sich die erfindungsgemäße Lösung also auf eine elektrische Koppelanordnung zur kabellosen Signalübertragung, bei der das Signal im Inneren eines mindestens teilweise hohlen Maschinenelements übertragen wird. Dabei können die Sensorsignale mehrerer auf dem Maschinenelement angeordneter Sensoren über eine in den Hohlraum hineinragende Koppelelement erfasst werden. Ebenso können mehrere Sensoren mit einem Koppelelement verbunden sein. Somit ist die erfindungsgemäße Lösung insbesondere geeignet für die Erfassung von Sensorsignalen auf drehenden Bauteilen.

In besonders vorteilhafter Weise lässt sich die erfindungsgemäße Lösung somit zur kabellosen Erfassung von beispielsweise Rotortemperaturen eines Traktionsmotors einsetzen. Bei zu hohen Temperaturen im Rotor kommt es zu einer Entmagnetisierung der Magnete und so zu einer Beschädigung des Elektromotors. Aus diesem Grund wird bislang auf ein aufwändig teureres Magnetmaterial zurückgegriffen, um einer solchen Entmagnetisierungsneigung entgegenzuwirken.

Mit der erfindungsgemäßen Lösung kann die Temperatur jedoch direkt an den Magneten gemessen werden und die maximal erlaubte Temperatur exakt angesteuert werden. Ein weiterer Nutzen in Bezug auf die Ermittlung der Rotortemperatur stellt sich im Hinblick auf die Berechnung des Drehmoments des Elektromotors dar. Das Drehmoment des Elektromotors wird gewöhnlich über Kennfelder ermittelt, in denen die Rotortemperatur eine wichtige Einflussgröße darstellt. Durch die mit einer kabellosen Temperatursensorik messbare Rotortemperatur kann das Drehmoment genauer berechnet werden. Weiterhin besteht die Möglichkeit, die Temperatur von temperaturkritischen Getriebebauteilen, insbesondere von Lagern, zu überwachen und diese bedarfsgerecht zu kühlen. Dies verringert infolgedessen den Ölbedarf und damit auch die mit einer Druckölschmierung gewöhnlich einhergehenden Planschverluste.

Die erfindungsgemäße Lösung ermöglicht es beispielweise in Umsetzung eines Sensornetzwerkes viele Temperatursensoren mit geringem Aufwand an beliebige Stellen eines Elektromotors oder eines Getriebes zu integrieren, und deren Messwerte über eine zentrale elektronische Auswerteeinheit zu erfassen und anwendungsspezifisch zu verarbeiten. Hierdurch lässt sich eine optimale Systemregelung realisieren.

Gemäß einer bevorzugten Ausführungsform der Erfindung ist das senderseitige hohlzylindrische Koppelelement rohr- oder hülsenförmig ausgebildet. Dieses lässt sich vorgefertigt in den ebenfalls vorzugsweise zylindrischen Hohlraum des Maschinenelements mit Innenwandungskontakt einfügen und hieran befestigen, beispielsweise durch Kleben. Es ist darauf zu achten, dass zwischen dem hohlzylindrischen Koppelelement, das vorzugsweise aus einem Metall, beispielsweise Kupfer, besteht und der Innenwandung des gewöhnlich ebenfalls aus einem elektrisch leitfähigen Material, vorzugsweise Stahl, bestehenden Maschinenelements eine Isolationsschicht erforderlich ist, welche beispielsweise aus einem elektrisch nicht-leitfähigen Kunststoff bestehen kann. Die Isolationsschicht kann dabei Bestandteil des vorgefertigten rohr- oder hülsenförmigen Koppelelements sein oder ebenfalls als separates hülsenförmiges Element ausgebildet sein und insoweit beispielsweise dessen äußere Mantelfläche bilden. Hierüber lässt sich das hohlzylindrische Koppelelement durch eine Klebeverbindung oder dergleichen im Hohlraum des hohlen Maschinenelements befestigen. Neben einer solchen stoffschlüssigen Verbindung ist auch eine kraftschlüssige Verbindung, beispielsweise durch Einpressen, denkbar.

Gemäß einer weiteren Ausführungsform des sensorseitigen hohlzylindrischen Koppelements kann dieses auch als eine Folie oder Beschichtung ausgebildet sein. Im Falle einer Folie besitzt diese eine außenseitig hierauf aufgebrachte elektrische Isolationsschicht. Mit einer solchen mehrschichtigen Folie lässt sich der Hohlraum des Maschinenelements in einfacher Weise auskleiden, wobei eine Klebbefestigung empfohlen wird. Daneben ist es auch denkbar, einen zylindrischen Hohlraum des Maschinenelements zunächst mit einer elektrischen Isolationsschicht, beispielsweise einem Kunststoff, zu beschichten, worauf wiederum eine elektrisch leitende Schicht, beispielsweise aus einem Metall aufgebracht wird. Dies kann beispielsweise durch Aufdampfen in Vakuum erfolgen.

Daneben ist es auch denkbar, das hohlzylindrische Koppelement aus einem Leiterplattenmaterial zu bilden, insbesondere als eine flexible Leiterplatte oder eine aus mehreren Segmenten bestehende Leiterplatte wären hierfür geeignet.

Gemäß einer weiteren die Erfindung verbessernde Maßnahme wird vorgeschlagen, dass das senderseitige hohlzylindrische Koppelelement koaxial zum empfängerseitigen stiftförmigen Koppelelement angeordnet ist. Hierdurch lässt sich eine besonders hohe Signalqualität erzielen und das empfängerseitig stiftförmige Koppelelement ist besonders geschützt innerhalb der Hohlraumstruktur des Maschinenelements angeordnet. Dies gilt sowohl in mechanischer als auch in funktechnischer Hinsicht bezüglich Störsignalen.

Zu diesem Zweck wird ferner vorgeschlagen, dass das senderseitig hohlzylindrische Koppelelement stirnseitig über das distale Ende des empfängerseitig stiftförmigen Koppelelements hinausragt. Vorzugsweise sollte bei den hier besonders interessierenden kraftfahrzeugtechnischen Anwendungen das stiftförmige Koppelelement gegenüber dem hohlzylindrischen Koppelement um 5 bis 10 mm kürzer sein.

Für eine weitere Verbesserung der Signalübertragung wird vorgeschlagen, dass die Länge des senderseitig hohlzylindrischen Koppelelements und/oder des empfängerseitig stiftförmigen Koppelements ein Vielfaches der Wellenlänge der Arbeitsfrequenz der kabellosen Signalübertragung beträgt. Hierfür kann beispielsweise nach einem Viertel, die Hälfte oder Dreiviertel der Wellenlänge dimensioniert werden.

Das empfangsseitig stiftförmige Koppelelement lässt sich beispielsweise als Stab, Rohr oder Hülse ausführen und kann mit einer elektrisch nicht-leitfähigen Beschichtung versehen werden, um einen direkten elektrischen Kontakt mit dem sendeseitigen hohlzylindrischen Koppelelement, beispielsweise infolge einer ungewollten Verformung, zu vermeiden.

Im Fall einer Rohr oder Hülsenform des Koppelelementes kann dieses auf einem mit dem Gehäuse verbundenen Bauteil angeordnet sein. Besteht das gehäuseverbundene Bauteil aus einem metallischem Werkstoff, sollte die Innenfäche des rohr- hülsenförmigen Koppelelementes mit einer Isolationsschicht versehen sein. Die Isolationsschicht kann dabei Bestandteil des vorgefertigten rohr- oder hülsen-förmigen Koppelelements sein oder ebenfalls als separates hülsenförmiges Element ausgebildet sein und insoweit beispielsweise dessen innere Mantelfläche bilden.

Gemäß einer weiteren die Erfindung verbessernde Maßnahme wird vorgeschlagen, dass zum Schutz vor einem ungewollten Verformen des empfängerseitigen stiftförmigen Kupplungselements ein dieses umgebendes und gegenüber dem hohlzylindrischen Koppelelement abstützendes nicht-magnetisches und/oder nicht-elektrisches Lagerelement versehen werden kann. So genügt hierfür eine simple Kunststoffscheibe, welche außenrandseitig im hohlzylindrischen Koppelelement eingeklebt ist und durch deren zentralen Durchbruch das stiftförmige Koppelelement hindurchragt.

Die kabellose Signalübertragung kann im Rahmen der erfindungsgemäßen Lösung auf einer SAW- oder RFID-Technologie basieren. Als Arbeitsfrequenz kommen vorzugsweise die ISM-Bänder 13,5 MHz, 433 MHz, 868 MHz, 2,4 GHz oder 5 GHz oder andere Standard-Funkbänder, beispielsweise das SDR-Band in Betracht.

Gemäß einer bevorzugten Anwendungsform ist das zumindest teilweise hohle Maschinenelement eine Hohlwelle einer Zahnradpaarung oder einer Antriebswelle im Rahmen eines Antriebsstrangs eines Kraftfahrzeugs oder eine Windenergieanlage. Die erfindungsgemäße Lösung macht sich insoweit die Hohlraumstruktur dieses in erster Linie aus für eine Öldurchführung zum Einsatz kommenden Maschinenelements zunutze, um eine mechanisch geschützte und signalübertragungstechnisch zuverlässige Sensoranbindung zu schaffen.

Vorzugsweise ist das Maschinenelement drehbar gelagert und das readerseitige Koppelelement am ortsfesten Gehäuse befestigt. Für eine Energieversorgung des aktiven Sensors kann ein Energy Harvesting Modul oder dergleichen vorgesehen werden. Falls das readerseitige Koppelelement sehr dünn und lang ist, kann dieses versteift werden oder zusätzlich gehalten sein. Er kann innerhalb oder außerhalb des Gehäuses angeordnet sein.

Eine elektrisch entkoppelnde Schicht oder Hülse am sende- oder empfangsseitigem Koppelelement ist ebenfalls von Vorteil. Das Dielektrikum, Luft oder Öl, insbesondere die Dielektrizitätskonstante zwischen den Koppelementen, steht mit der Länge des Koppelelements in Beziehung. Ebenso kann die genannte Isolationsschicht zwischen dem senderseitigen Koppelelement und dem Maschinenbauteil oder zwischen dem empfangsseitigen Koppelelement und dem gehäusefesten Bauteil ein Dielektrikum darstellen. Dieses Dielektrikum bzw. insbesondere die Dielektrizitätskonstante der Isolationsschicht kann ebenfalls mit der Länge des Koppelelements in Beziehung stehen.

### Detailbeschreibung anhand Zeichnung

Weitere die Erfindung verbessernde Maßnahmen werden nachstehend gemeinsam mit der Beschreibung bevorzugter Ausführungsbeispiele der Erfindung anhand der Figuren näher dargestellt. Es zeigt:
- Fig. 1: einen schematischen Längsschnitt durch eine auf einer Hohlwelle angeordneten Zahnradpaarung mit einem Sensor zur Temperaturerfassung, der über eine elektrische Koppelanordnung gemäß eines ersten Ausführungsbeispiels der Erfindung angeschlossen ist,
- Fig. 2: einen schematischen Längsschnitt durch eine auf einer Hohlwelle angeordneten Zahnradpaarung mit einem Sensor zur Temperaturerfassung, der über eine elektrische Koppelanordnung gemäß eines zweiten Ausführungsbeispiels der Erfindung angeschlossen ist,
- Fig. 3: einen schematischen Längsschnitt durch eine auf einer Hohlwelle angeordneten Zahnradpaarung mit einem Sensor zur Temperaturerfassung, der über eine elektrische Koppelanordnung gemäß eines dritten Ausführungsbeispiels der Erfindung angeschlossen ist, und
- Fig. 4: einen schematischen Längsschnitt durch eine auf einer Hohlwelle angeordneten Zahnradpaarung mit einem Sensor zur Temperaturerfassung, der über eine elektrische Koppelanordnung gemäß eines vierten Ausführungsbeispiels der Erfindung angeschlossen ist.

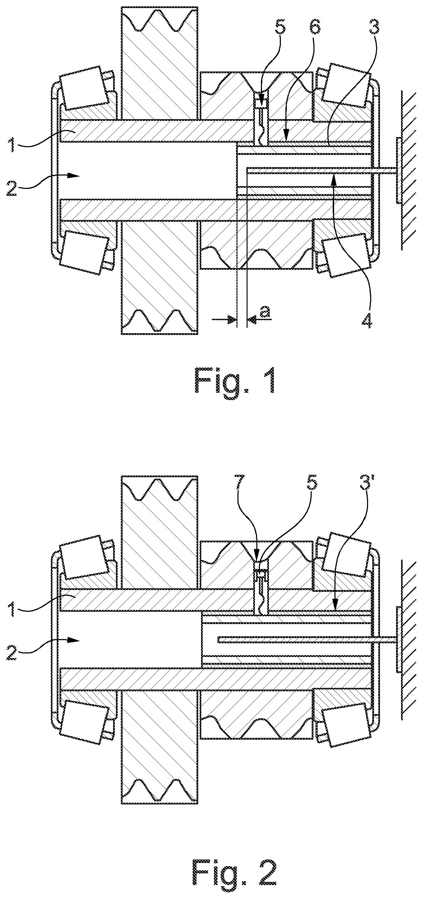

Gemäß Fig. 1 bildet eine Zahnradpaarung tragende Hohlwelle 1 einen Hohlraum 2, in dem ein hohlzylindrisches Koppelelement 3 untergebracht ist und welches über Luft als Dielektrikum mit einem stiftförmigen Koppelelement 4 zur Bildung einer kabellosen Signalübertragungsstrecke zusammenwirkt.

Im Zahnradbereich außerhalb der Hohlwelle 1 ist ein Sensor 5 zur Erfassung der Bauteiltemperatur angeordnet, welcher über eine als Dielektrikum wirkenden Kunststoffschicht 6 elektrisch mit dem senderseitigen hohlzylindrischen Koppelelement 3 verbunden ist. Das hiermit empfängerseitig korrespondierende stiftförmige Koppelelement 4 ragt größtenteils in den im Hohlraum 2 angeordneten hohlzylindrischen Bereich des senderseitigen Koppelelements 3 hinein. Dabei ragt das senderseitig hohlzylindrische Koppelelement 3 um eine Länge a stirnseitig über das distale Ende des empfängerseitig stiftförmigen Koppelements 4 hinaus. Das stiftförmige Koppelelement 4 ist koaxial zum hohlzylindrischen Koppelelement 3 angeordnet.

Bei diesem Ausführungsbeispiel ist das stiftförmige Koppelelement 4 als ein aus einem elektrisch leitfähigen Material bestehender Stab ausgeführt.

Nach Fig. 2 ist das senderseitige hohlzylindrische Koppelelement 3' in Form einer Folie ausgebildet, welche seitens der Außenmantelfläche mit einer elektrisch isolierenden Beschichtung aus Kunststoff versehen ist. Zusätzlich ist der Sensor 5 in einer isolierenden Sensorschutzhülle 7 untergebracht, über welche der Sensor 5 in eine korrespondierende Bohrung des Maschinenelements eingepresst ist. Ansonsten entspricht dieses Ausführungsbeispiel dem vorstehend beschriebenen Ausführungsbeispiel.

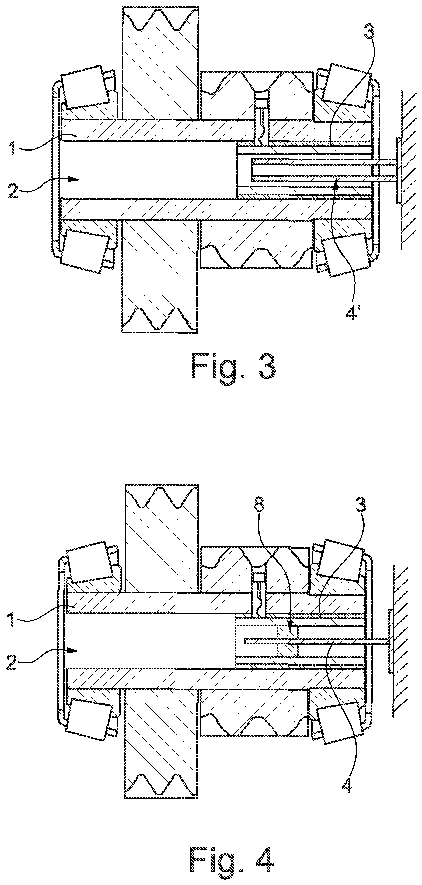

Bei der Fig. 3 ist im Unterschied zum eingangs beschriebenen Ausführungsbeispiel das empfängerseitige stiftförmige Koppelelement 4' in Form eines Rohres ausgebildet, so dass diesem stiftförmigen Koppelelement 4' eine Hohlwellenleitereigenschaft zur verbesserten Signalübertragung verliehen wird. Ansonsten entspricht auch dieses Ausführungsbeispiel dem eingangs beschriebenen Ausführungsbeispiel.

Gemäß Fig. 4 ist im Zwischenbereich zwischen dem stiftförmigen Koppelelement 4 und dem dieses koaxial umgebenden hohlzylindrischen Koppelelement 3 ein Lagerelement 8 angeordnet. Das Lagerelement 8 besteht aus einem nicht-magnetischen und nichtelektrischen Kunststoff und dient der Abstützung des bei diesem Ausführungsbeispiel recht dünnen stiftförmigen Koppelelements 4 zur Gewährleistung seiner Solllage, selbst bei schnelldrehender Hohlwelle 1. Ansonsten entspricht auch dieses Ausführungsbeispiel dem eingangs beschriebenen Ausführungsbeispiel.

Die Erfindung ist nicht beschränkt auf die vorstehend detaillierter beschriebenen bevorzugten Ausführungsbeispiele. So ist es beispielsweise auch möglich, anstelle einer Hohlwelle einen Hohlraum eines anderen zumindest teilweise hohlen Maschinenelements zur Unterbringung der erfindungsgemäßen elektrischen Koppelanordnung zu nutzen.

### Bezugszeichenliste

- 1: Hohlwelle
- 2: Hohlraum
- 3: hohlzylindrisches Koppelement
- 4: stiftförmiges Koppelelement
- 5: Sensor
- 6: Dielektrikum
- 7: Sensorschutzhülle
- 8: Lagerelement

- a: zurückstehende Länge

## Patentansprüche

1. Elektrische Koppelanordnung zur kabellosen Signalübertragung im Bereich eines Hohlraums (2) eines zumindest teilweise hohlen Maschinenelements, umfassend ein mit mindestens einem im oder am Maschinenelement angeordneten Sensor (5) verbundenes senderseitiges hohlzylindrisches Koppelelement (3), welches im Hohlraum (2) eingepasst ist, und welches über eine hohlrauminterne Übertragungsstrecke mit einem empfängerseitigen stiftförmigen Koppelelement (4) korrespondiert, **dadurch gekennzeichnet, dass** das stiftförmige Koppelelement zumindest teilweise in den im Hohlraum (2) angeordneten hohlzylindrischen Bereich des senderseitigen Koppelelements (3) hineinragt.

2. Elektrische Koppelanordnung nach Anspruch 1,
**dadurch gekennzeichnet, dass** das senderseitige Koppelelement (3) rohr- oder hülsenförmig ausgebildet ist.

3. Elektrische Koppelanordnung nach Anspruch 1,
**dadurch gekennzeichnet, dass** das senderseitige Koppelelement (3) als Folie oder Beschichtung ausgebildet ist.

4. Elektrische Koppelanordnung nach Anspruch 1,
**dadurch gekennzeichnet, dass** das senderseitige Koppelelement (3) koaxial zum empfängerseitigen stiftförmigen Koppelelement (4) angeordnet ist.

5. Elektrische Koppelanordnung nach Anspruch 1,
**dadurch gekennzeichnet, dass** das senderseitig Koppelelement (3) stirnseitig über das distale Ende des empfängerseitig Koppelelements (4) hinausragt.

6. Elektrische Koppelanordnung nach Anspruch 1,
**dadurch gekennzeichnet, dass** die Länge des senderseitig hohlzylindrischen Koppelelements (3) und/oder des empfängerseitig stiftförmigen Koppelelements (4) ein Vielfaches der Wellenlänge der Arbeitsfrequenz der Signalübertagung darstellt.

7. Elektrische Koppelanordnung nach Anspruch 1,
**dadurch gekennzeichnet, dass** das empfängerseitig stiftförmige Koppelelement (4) als Stab, Rohr, oder Hülse ausgeführt ist.

8. Elektrische Koppelanordnung nach Anspruch 1,
**dadurch gekennzeichnet, dass** empfängerseitig stiftförmige Koppelelement (4) gegenüber dem Maschinenelement durch mindestens ein nicht-magnetisches und/oder nicht-elektrisches Lagerelement (8) abgestützt oder elektrisch entkoppelt ist.

9. Elektrische Koppelanordnung nach Anspruch 1,
**dadurch gekennzeichnet, dass** das den Hohlraum (2) aufweisende Maschinenelement als eine Hohlwelle (1) in einem Antriebsstrang eines Kraftfahrzeuges oder einer Windenergieanlage ausgeführt ist.

10. Getriebe oder/oder Elektromotor eines Hybrid- oder Elektrofahrzeugs mit einer elektrischen Koppelanordnung zur kabellosen Signalübertragung im Bereich eines Hohlraums (2) eines zumindest teilweise hohlen Maschinenelements nach einem der vorstehenden Ansprüche.

## Claims

1. An electric coupling arrangement for wireless signal transmission in the area of a cavity (2) of an at least partially hollow machine part, comprising a transmitter-side hollow-cylindrical coupling element (3), which is connected to at least one sensor (5) arranged in or on the machine part and which is fitted in the cavity (2), and which corresponds to a receiver-side pin-shaped coupling element (4) via a transmission path within the cavity, **characterized in that** the pin-shaped coupling element projects at least partially into the hollow-cylindrical area of the transmitter-side coupling element (3) arranged in the cavity (2).

2. The electric coupling arrangement according to claim 1,
**characterized in that** the transmitter-side coupling element (3) is tubular or sleeve-shaped.

3. The electric coupling arrangement according to claim 1,
**characterized in that** the transmitter-side coupling element (3) is a film or coating.

4. The electric coupling arrangement according to claim 1,
**characterized in that** the transmitter-side coupling element (3) is arranged coaxially to the receiver-side pin-shaped coupling element (4).

5. The electric coupling arrangement according to claim 1,
**characterized in that** the transmitter-side coupling element (3) projects at the end face beyond a distal end of the receiver-side coupling element (4).

6. The electric coupling arrangement according to claim 1,
**characterized in that** the length of the transmitter-side hollow-cylindrical coupling element (3) and/or the receiver-side pin-shaped coupling element (4) is a multiple of the wavelength of the operating frequency of the signal transmission.

7. The electric coupling arrangement according to claim 1,
**characterized in that** the receiver-side pin-shaped coupling element (4) is configured as a rod, tube, or sleeve.

8. The electric coupling arrangement according to claim 1,
**characterized in that** the receiver-side pin-shaped coupling element (4) is supported or electrically decoupled with respect to the machine part by at least one non-magnetic and/or non-electric bearing element (8).

9. The electric coupling arrangement according to claim 1,
**characterized in that** the machine part having the cavity (2) is configured as a hollow shaft (1) in a drive train of a motor vehicle or a wind energy plant.

10. A transmission and/or electric motor of a hybrid or electric vehicle having an electric coupling arrangement for wireless signal transmission in the area of a cavity (2) in an at least partially hollow machine part according to one of the preceding claims.

## Revendications

1. Agencement de couplage électrique pour la transmission de signaux sans fil dans la zone d'une cavité (2) d'une partie de machine au moins partiellement creuse, comprenant un élément de couplage (3) cylindrique creux côté émetteur relié à au moins un capteur (5) agencé dans ou sur la partie de machine et qui est monté dans la cavité (2) et qui correspond par un trajet de transmission à l'intérieur de la cavité à un élément de couplage (4) en forme de tige côté récepteur, **caractérisé en ce que** l'élément de couplage en forme de tige fait saillie au moins partiellement dans la zone cylindrique creuse de l'élément de couplage (3) côté émetteur agencée dans la cavité (2).

2. Agencement de couplage électrique selon la revendication 1,
**caractérisé en ce que** l'élément de couplage (3) côté émetteur est réalisé sous forme de tube ou de douille.

3. Agencement de couplage électrique selon la revendication 1,
**caractérisé en ce que** l'élément de couplage (3) côté émetteur est réalisé sous forme de feuille ou de revêtement.

4. Agencement de couplage électrique selon la revendication 1,
**caractérisé en ce que** l'élément de couplage (3) côté émetteur est agencé coaxialement par rapport à l'élément de couplage (4) en forme de tige côté récepteur.

5. Agencement de couplage électrique selon la revendication 1,
**caractérisé en ce que** l'élément de couplage (3) côté émetteur fait saillie côté avant sur l'extrémité distale de l'élément de couplage (4) côté récepteur.

6. Agencement de couplage électrique selon la revendication 1,
**caractérisé en ce que** la longueur de l'élément de couplage (3) cylindrique creux côté émetteur et/ou de l'élément de couplage (4) en forme de tige côté récepteur représente un multiple de la longueur d'onde de la fréquence de travail de la transmission de signaux.

7. Agencement de couplage électrique selon la revendication 1,
**caractérisé en ce que** l'élément de couplage (4) en forme de broche côté récepteur est réalisé sous forme de barre, de tube ou de douille.

8. Agencement de couplage électrique selon la revendication 1,
**caractérisé en ce que** l'élément de couplage (4) en forme de tige côté récepteur est supporté ou découplé électriquement par rapport à la partie de machine par au moins un élément de palier (8) non magnétique et/ou non électrique.

9. Agencement de couplage électrique selon la revendication 1,
**caractérisé en ce que** la partie de machine présentant la cavité (2) est réalisée sous forme d'un arbre creux (1) dans une chaîne cinématique d'un véhicule automobile ou d'une éolienne.

10. Transmission et/ou moteur électrique d'un véhicule hybride ou électrique comportant un agencement de couplage électrique pour la transmission de signaux sans fil dans la zone d'une cavité (2) d'une partie de machine au moins partiellement creuse selon l'une quelconque des revendications précédentes.
